# FASCICULE DE BREVET EUROPEEN

(11) **EP 2 283 283 B1**
(45) Date de publication et mention de la délivrance du brevet: **08.02.2012**
(21) Numéro de dépôt: 09742220.8
(22) Date de dépôt: 24.04.2009
(51) Int. Cl.: F25B 21/00, H01L 37/00

(54) **DISPOSITIF DE GENERATION DE FLUX THERMIQUE A MATERIAU MAGNETOCALORIQUE**
VORRICHTUNG MIT MAGNETOKALORISCHEM MATERIAL ZUR ERZEUGUNG EINES WÄRMEFLUSSES
THERMAL FLUX GENERATING DEVICE WITH MAGNETOCALORIC MATERIAL

(30) Priorité: 28.04.2008 FR 0802369; 01.07.2008 FR 0803729
(43) Date de publication de la demande: 16.02.2011
(73) Titulaire: Cooltech Applications S.A.S, 67810 Holtzheim (FR)
(72) Inventeur: HEITZLER, Jean-Claude, F-68180 Horbourg Wihr (FR); MULLER, Christian, F-67000 Strasbourg (FR)
(74) Mandataire: Nithardt, Roland
(86) Numéro de dépôt international: PCT/FR2009/000484
(87) Numéro de publication internationale: WO 2009/136022

(56) Documents cités:
- WO-A-03/016794
- US-A1- 2005 120 720

## Description

### Domaine technique :

La présente invention concerne un dispositif de génération de flux thermique à matériau magnétocalorique comportant au moins une unité de génération de flux thermique logée dans une carcasse extérieure et pourvue d'au moins un organe thermique contenant au moins un élément magnétocalorique, d'au moins un arrangement magnétique agencé pour générer un champ magnétique, d'au moins un entraînement électrique agencé pour assurer le déplacement dudit arrangement magnétique par rapport à chaque élément magnétocalorique afin de le soumettre à une variation de champ magnétique et provoquer une variation de sa température, des moyen pour capter des calories et/ou frigories émises par chaque élément magnétocalorique en raison de ladite variation du champ magnétique, ledit entraînement électrique étant intégré au dispositif de génération de flux thermique à matériau magnétocalorique et comportant au moins un bobinage électrique muni d'un enroulement porté par une armature et alimenté en courant électrique de manière à générer une variation de champ magnétique qui engendre le déplacement d'un assemblage mobile portant ledit arrangement magnétique.

### Technique antérieure :

La publication WO-A-03/050456 décrit un dispositif de réfrigération magnétique à matériau magnétocalorique utilisant deux aimants permanents et comportant une enceinte annulaire monobloc délimitant des compartiments à matériau magnétocalorique, par exemple du gadolinium, sous forme poreuse, ces compartiments étant séparés par des joints. Chaque compartiment est pourvu au minimum de quatre orifices dont un orifice d'entrée et un orifice de sortie d'une part, connectés à un circuit chaud et un orifice d'entrée et un orifice de sortie d'autre part, connectés à un circuit froid. Les deux aimants permanents sont animés d'un mouvement de rotation continue de sorte qu'ils balayent successivement les différents compartiments à matériaux magnétocaloriques fixes et les soumettent à des variations du champ magnétique. Les calories et/ou frigories émises par le matériau magnétocalorique sont captées par les circuits chaud et froid de fluide caloporteur et dirigées vers des échangeurs de chaleur. Les aimants permanents sont entraînés en rotation par un moteur électrique qui entraîne également des joints rotatifs pour que le conduit de fluide caloporteur traversant les compartiments à matériaux magnétocaloriques fixes soit successivement raccordé aux circuits chaud et froid. Ce dispositif, qui simule ainsi le fonctionnement d'un anneau liquide, nécessite une rotation en continu et synchrone précise des différents joints rotatifs et des aimants permanents.

Le déplacement, notamment l'entraînement linéaire ou l'entraînement en rotation, des aimants qui génèrent le champ magnétique dont la variation, due au déplacement linéaire ou rotatif, provoque les cycles de température des matériaux magnétocaloriques, nécessite des moyens moteurs qui sont habituellement constitués d'un moteur électrique classique. On notera que les matériaux magnétocaloriques classiques ont pour effet de s'échauffer quasi instantanément lorsqu'ils pénètrent dans un champ magnétique. Les matériaux dits magnétocaloriques inverses ont la particularité de se refroidir au moment où ils entrent dans un champ magnétique. La génération de calories ou celle de calories « négatives » dites frigories présente des intérêts divers selon les applications envisagées.

Le moteur qui engendre le déplacement des aimants présente un certain encombrement qui s'ajoute à l'encombrement du dispositif et augmente son prix de revient, son poids et son volume et réduit son rendement, ce qui constitue un ensemble d'inconvénients qui pénalisent le développement de cette technologie, notamment pour générer du froid, malgré l'intérêt écologique indiscutable de la solution.

La publication US 2005/0120720 A1 propose un générateur magnétocalorique dans lequel la motorisation électrique est intégrée et comporte des bobinages enroulés autour des pôles d'un stator, le rotor étant libre en rotation et constitué d'aimants permanents. Dans cette réalisation, les éléments magnétocaloriques sont disposés radialement de chaque coté des pôles. Ils sont par conséquent éloignés des aimants permanents, ne sont pas soumis au flux magnétique maximal et ne peuvent pas fournir leurs performances thermiques maximales, ce qui pénalise le rendement thermique global du générateur. De plus, ces éléments magnétocaloriques subissent un échauffement dû à leur proximité avec les bobinages qui entrainent un effet néfaste de rémanence thermique.

### Exposé de l'invention :

La présente invention se propose de pallier ces inconvénients en réalisant un dispositif de génération de flux thermique à matériau magnétocalorique, économique et peu encombrant, dont tous les composants sont agencés en vue d'obtenir une construction optimisée dans un volume minimal avec une efficacité énergétique optimale.

Ce but est atteint par le dispositif de l'invention, tel que défini en préambule, caractérisé en ce que ledit élément magnétocalorique est adjacent audit arrangement magnétique et disposé dans l'entrefer constitué par au moins l'un quelconque d'un premier espace délimité entre ledit arrangement magnétique et ladite armature et d'un second espace délimité entre ledit arrangement magnétique et ladite carcasse extérieure.

En fonction de la configuration du dispositif selon l'invention, il peut être prévu d'intégrer un ou plusieurs bobinages électriques. A cet effet, le dispositif peut comporter au moins deux bobinages électriques.

Cette solution permet, par une commande en direct de chaque bobinage électrique, d'assurer le déplacement dudit arrangement magnétique et, notamment lorsque le champ magnétique est obtenu par des aimants permanents, de coopérer avec ces aimants permanents pour optimiser l'efficacité énergétique du matériau magnétocalorique dans le champ magnétique grâce à ces bobinages électriques.

Toutefois, il convient de remarquer que pour des questions de rendement, l'entrefer entre chaque bobinage et l'assemblage mobile qui génère le champ magnétique, est avantageusement le plus étroit possible. Or si l'on dispose des éléments magnétocaloriques dans cet entrefer, on augmente immanquablement sa dimension transversale, ce qui peut nuire, dans certains cas critiques, à l'efficacité du système.

C'est pourquoi, selon une forme de réalisation particulière du dispositif, ledit élément magnétocalorique est uniquement disposé dans le premier espace de l'entrefer.

Selon une autre forme de réalisation particulière du dispositif, ledit élément magnétocalorique est uniquement disposé dans le second espace de l'entrefer adjacent au premier espace.

Selon encore une autre forme de réalisation particulière, ledit élément magnétocalorique est avantageusement disposé, de manière continue, dans le premier espace et dans le second espace adjacent au premier.

Selon une réalisation spécifique, lorsque ledit entraînement électrique est un moteur rotatif, le dispositif peut comporter avantageusement un stator fixe logé dans la carcasse périphérique et un rotor monté à l'intérieur de ladite carcasse, coaxialement par rapport audit stator fixe, ledit rotor portant ledit arrangement magnétique et ledit stator fixe comportant lesdits bobinages électriques, et les éléments magnétocaloriques forment une couronne continue entourant ledit rotor et occupant intégralement ledit premier espace de l' entrefer entre ledit rotor et ledit stator fixe.

Selon une autre réalisation spécifique, lorsque ledit entraînement électrique est un moteur rotatif, le dispositif peut comporter avantageusement un stator fixe logé dans la carcasse périphérique et un rotor monté à l'intérieur de ladite carcasse, coaxialement par rapport audit stator, ledit rotor portant ledit arrangement magnétique et ledit stator fixe comportant au moins deux bobinages électriques qui s'étendent angulairement sur une première partie de ladite carcasse en laissant une deuxième partie de ladite carcasse libre de bobinages électriques, et chaque élément magnétocalorique est disposé dans ledit second espace de l'entrefer correspondant à ladite deuxième partie libre de bobinages électriques, ledit second espace étant adjacent audit premier espace correspondant à ladite première partie de ladite carcasse.

Selon une autre réalisation spécifique, lorsque ledit entraînement électrique est un moteur rotatif, le dispositif peut comporter un stator fixe logé dans la carcasse périphérique et un rotor monté à l'intérieur de ladite carcasse coaxialement par rapport audit stator fixe, ledit rotor portant ledit arrangement magnétique et ledit stator fixe comportant au moins deux bobinages électriques qui s'étendent angulairement sur une première partie de ladite carcasse en laissant une deuxième partie de ladite carcasse libre de bobinages électriques, et en ce que ledit élément magnétocalorique est disposé à la fois dans le premier espace correspondant à la première partie de la carcasse et dans le second espace adjacent au premier espace et correspondant à la deuxième partie libre de bobinages électriques.

Selon une autre réalisation spécifique, lorsque ledit entraînement électrique est un moteur linéaire, le dispositif peut comporter une carcasse allongée, un stator linéaire fixe logé dans ladite carcasse et un chariot mobile linéairement, alternativement par rapport audit stator fixe, le chariot mobile portant ledit arrangement magnétique et ledit stator fixe comportant lesdits bobinages électriques, et les éléments magnétocaloriques forment au moins une rangée continue alignée le long du stator linéaire fixe et occupant intégralement ledit premier espace de l'entrefer entre ledit chariot mobile et ledit stator linéaire.

Selon une autre réalisation spécifique, lorsque ledit entraînement électrique est un moteur linéaire, le dispositif peut comporter une carcasse allongée, un stator linéaire fixe logé dans ladite carcasse, comportant au moins un bobinage électrique et s'étendant sur une première partie de la longueur de cette carcasse en laissant libre de bobinages électriques une deuxième partie de ladite carcasse, un chariot mobile linéairement alternativement par rapport audit stator fixe et portant chaque arrangement magnétique, et chaque élément magnétocalorique est disposé dans ledit second espace de l'entrefer correspondant à ladite deuxième partie de ladite carcasse, ce second espace étant adjacent audit premier espace correspondant à la première partie de la carcasse.

Selon une autre réalisation spécifique, lorsque ledit entraînement électrique est un moteur linéaire, le dispositif peut comporter une carcasse allongée, un stator linéaire fixe logé dans ladite carcasse, comportant au moins un bobinage électrique et s'étendant sur une première partie de la longueur de cette carcasse en laissant libre de bobinages électriques une deuxième partie de ladite carcasse, un chariot, mobile linéairement, alternativement par rapport audit stator fixe et portant ledit arrangement magnétique, et ledit élément magnétocalorique est disposé à la fois dans le premier espace de l'entrefer correspondant à la première partie de la carcasse et dans le second espace adjacent au premier espace et correspondant à la deuxième partie de la carcasse libre de bobinages électriques.

D'une manière avantageuse, ledit arrangement magnétique comporte un ensemble d'aimants permanents pour générer le champ magnétique.

Afin de concentrer le champ magnétique généré, lesdits aimants permanents comportent au moins un élément magnétiquement perméable.

Selon un mode de réalisation particulier, ledit stator comporte préférentiellement un ensemble de bobinages électriques ayant chacun un axe disposé selon une direction sensiblement radiale.

Selon une forme de construction particulière, ledit stator linéaire fixe, peut comporter un ensemble de bobinages électriques ayant des axes parallèles et sensiblement perpendiculaires à la direction de déplacement dudit chariot mobile.

Afin d'imposer un sens de rotation privilégié audit rotor, ledit ensemble de bobinages électriques peut présenter une dissymétrie géométrique par rapport aux lignes de flux générées par ledit arrangement magnétique.

Afin d'imposer un sens de déplacement linéaire privilégié audit chariot mobile, ledit ensemble de bobinages électriques peut présenter une dissymétrie géométrique par rapport aux lignes de flux générées par ledit arrangement magnétique.

Le dispositif peut être complété par des moyens pilotant lesdits bobinages électriques, ces moyens comprenant au moins un circuit électronique agencé pour commuter séquentiellement ces bobinages.

### Description sommaire des dessins :

La présente invention et ses avantages apparaîtront mieux dans la description suivante de plusieurs modes de réalisation, donnés à titre d'exemples non limitatifs en référence aux dessins annexés, dans lesquels :
- la figure 1 est une vue en perspective d'une première forme de réalisation du dispositif de l'invention,
- la figure 2 est une vue en plan du dispositif de la figure 1,
- les figures 3A et 3B sont des vues en coupe selon les lignes A-A et B-B respectivement, de la figure 2,
- la figure 4 est une vue en perspective d'une deuxième forme de réalisation du dispositif de l'invention,
- la figure 5 est une vue partielle en perspective du dispositif de la figure 4,
- la figure 6 est une vue en plan d'une variante de réalisation du dispositif selon l'invention,
- les figures 7A, 7B et 7C représentent une première forme de réalisation du dispositif de l'invention dans lequel le moteur est du type linéaire,
- les figures 8A, 8B et 8C représentent une deuxième forme de réalisation du dispositif de l'invention dans lequel le moteur est linéaire
- la figure 9 représente une variante de réalisation du dispositif selon l'invention, dans lequel le moteur est rotatif,
- les figures 10A et 10B représentent une autre variante de réalisation du dispositif de l'invention, dans lequel le moteur est linéaire, dans deux positions successives,
- les figures 11A et 11 B représentent une autre variante de réalisation du dispositif de l'invention, dans lequel le moteur est linéaire, dans deux positions successives,
- la figure 12 représente une autre variante de réalisation du dispositif de l'invention, dans lequel le moteur est rotatif, et
- la figure 13 représente une autre variante de réalisation du dispositif de l'invention, dans lequel le moteur est linéaire.

### Différentes manières de réaliser l'invention :

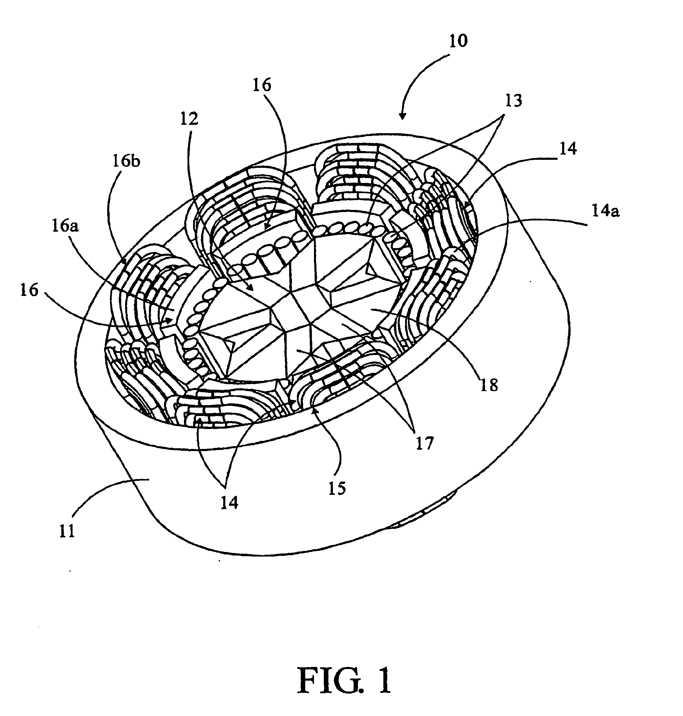

En référence aux figures 1 à 3, le dispositif 10 représenté, qui correspond à une variante de réalisation particulière de géométrie sensiblement cylindrique, comporte une carcasse 11 extérieure cylindrique, réalisée en métal ou en tout autre matériau adéquat, qui délimite l'espace intérieur du dispositif 10. A l'intérieur de cette carcasse 11 sont montés un rotor 12 qui est constitué d'un arrangement magnétique rotatif décrit plus en détail par la suite, au moins un organe thermique constitué dans ce cas d'un anneau sensiblement circulaire d'éléments 13 comportant au moins un matériau magnétocalorique, cet anneau étant disposé coaxialement autour dudit rotor 12 et un ensemble de bobinages électriques 14, d'axes radiaux, régulièrement disposés autour dudit rotor 12 et constituant un stator 15. Les éléments magnétocaloriques 13 sont adjacents à l'arrangement magnétique et disposés dans l'entrefer circulaire séparant le rotor 12 du stator 15, correspondant à un premier espace E1, afin de bénéficier du flux magnétique maximal.

L'arrangement magnétique rotatif dudit rotor 12 tel que représenté, comporte plusieurs aimants permanents 17, en l'occurrence au nombre de huit, séparés par des éléments 18 en fer doux ou similaire, en l'occurrence également au nombre de huit, qui se trouvent intercalés entre les aimants permanents 17 et dont certains peuvent former des concentrateurs de flux magnétique. L'ensemble est monté selon une géométrie radiale, les aimants permanents 17 ayant tous la même forme, et les éléments 18 en fer doux ou similaire, comme par exemple un alliage fer-cobalt (FeCo) ou un alliage fersilicium (FeSi), formés par exemple d'un empilage de tôles, ayant deux à deux la même forme géométrique et étant régulièrement intercalés entre les aimants permanents 17. Cette disposition n'est pas contraignante et il est envisageable de modifier tant la forme que le nombre et la disposition des composants de l'arrangement magnétique. L'objectif de cet arrangement magnétique est de réaliser le champ magnétique le plus intense, dans un espace relativement réduit et à un prix de construction le plus bas possible. Le champ magnétique génère des lignes de champ qui traversent les éléments magnétocaloriques 13 et il est variable en fonction de la rotation du rotor 12, de manière à engendrer, d'une manière connue en soi, des variations thermiques dans lesdits éléments magnétocaloriques 13. Les éléments magnétocaloriques 13 sont représentés schématiquement sous la forme de barreaux cylindriques, mais leur forme et leur structure peuvent être différentes. Le ou les matériaux magnétocaloriques utilisés peuvent par exemple être composés d'une structure poreuse, d'éléments structurés, de revêtement périphérique de pièces tubulaires ou similaires. Il est indispensable que la surface de contact des éléments magnétocaloriques 13 avec un fluide caloporteur destiné à capter les calories et/ou frigories émises soit la plus grande possible afin que les échanges thermiques puissent être effectués dans les meilleures conditions avec la plus grande efficacité.

Dans les dispositifs générateurs de flux thermique à effet magnétocalorique connus de ce type, le rotor 12 est entraîné par un moteur électrique indépendant, extérieur et couplé au rotor. Dans la présente réalisation, on génère le mouvement ou l'entraînement motorisé au moyen de composants disponibles, en utilisant les aimants permanents 17 existants et en leur associant, par exemple comme dans la variante illustrée, huit bobinages électriques 14 comprenant chacun un enroulement électrique 14a monté chacun sur une armature 16. Chaque armature 16 a sensiblement la forme d'un T et comprend une pièce de base 16a en forme de secteur circulaire et une branche 16b, perpendiculaire par rapport à la pièce de base 16a. Ces armatures 16 peuvent être réalisées en un des matériaux choisis dans le groupe comprenant le fer doux, un alliage de fer et de cobalt (FeCo), un alliage de fer et de silicium (FeSi). L'interaction du champ électromagnétique créé par les bobinages électriques 14 alimentés sélectivement, produit sur les aimants permanents 17, un couple qui produit le déplacement, dans ce cas la rotation du rotor 12. En conséquence, l'adjonction des bobinages électriques 14 permet de combiner la fonction d'entraînement du rotor 12 à la fonction de base du dispositif 10 de génération de flux thermique à matériau magnétocalorique, consistant à créer des variations alternées du champ magnétique en vue de provoquer des fluctuations de température au sein des éléments magnétocaloriques 13.

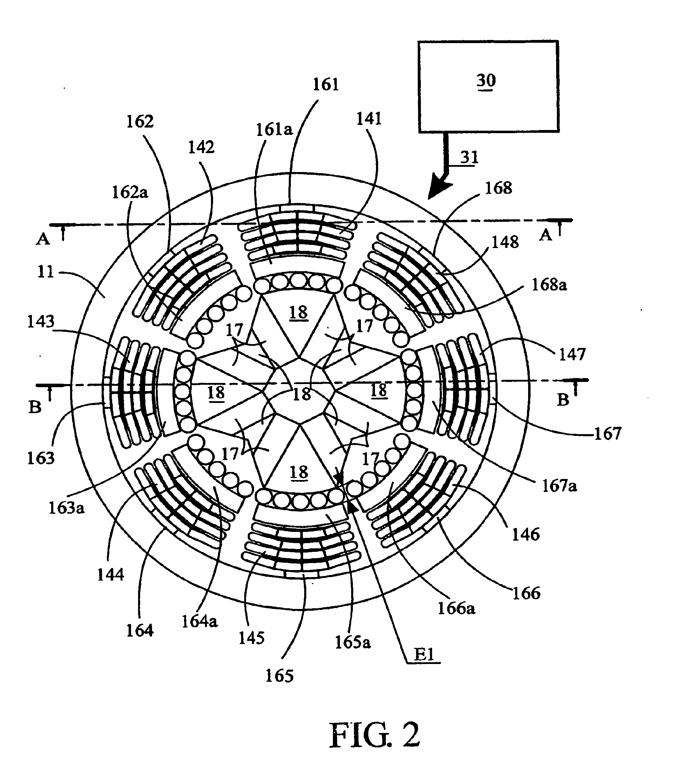

Comme le montre la figure 2, dans l'exemple représenté à huit bobinages électriques 141, 142, 143, 144, 145, 146, 147, et 148, on utilisé des moyens pour piloter lesdits bobinages électriques, par exemple un circuit électronique 30, représenté schématiquement, et des éléments de connexion 31. On alimente de manière séquentielle lesdits bobinages électriques pour créer, dans un premier temps des pôles magnétiques positifs (+) au niveau de pièces de base 161 a et 165a des armatures 161 et 165, correspondant respectivement aux bobinages électriques 141 et 145, et des pôles magnétiques négatifs (-) au niveau des pièces de base 163a et 167a des armatures 163 et 167 correspondant respectivement aux bobinages électriques 143 et 147. Dans un deuxième temps, on décale l'alimentation des bobinages de telle manière que l'on créée des pôles magnétiques positifs (+) au niveau des pièces de base 162a et 166a des armatures 162 et 166 correspondant respectivement aux bobinages électriques 142 et 146 et des pôles magnétiques négatifs (-) au niveau des pièces de base 164a et 168a des armatures 164 et 168 correspondant respectivement aux bobinages électriques 144 et 148. Ce processus permet de réaliser un champ tournant nécessaire pour entraîner le rotor 12. De façon avantageuse, une légère dissymétrie dans la disposition radiale des bobinages permettra d'initier un sens de rotation privilégié.

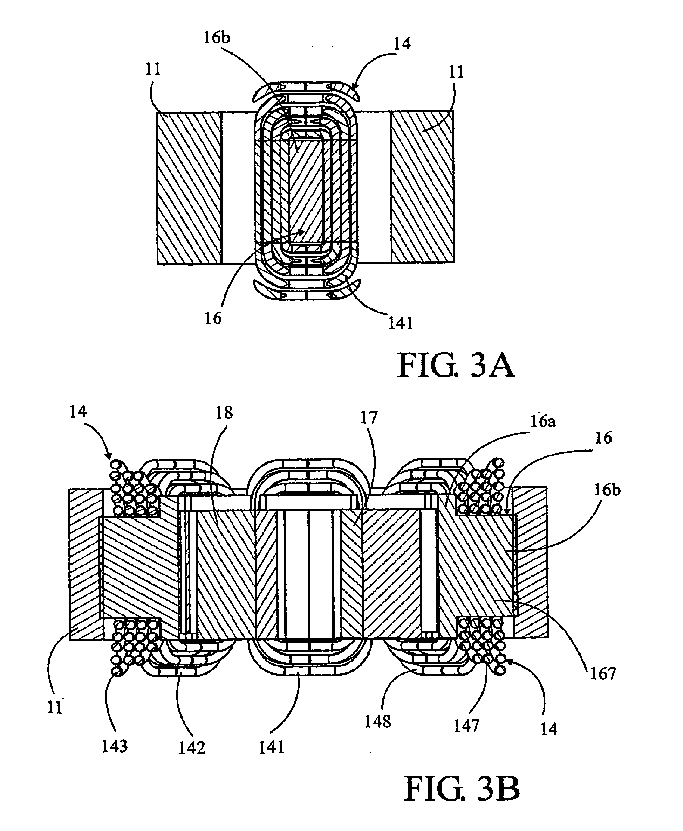

Les figures 3A et 3B représentent respectivement des vues du dispositif des figures 1 et 2 coupées selon les lignes A-A et B-B illustrant la disposition des enroulements des bobinages électriques 14 et des composants de l'armature 16 notamment de la branche 16b disposée radialement.

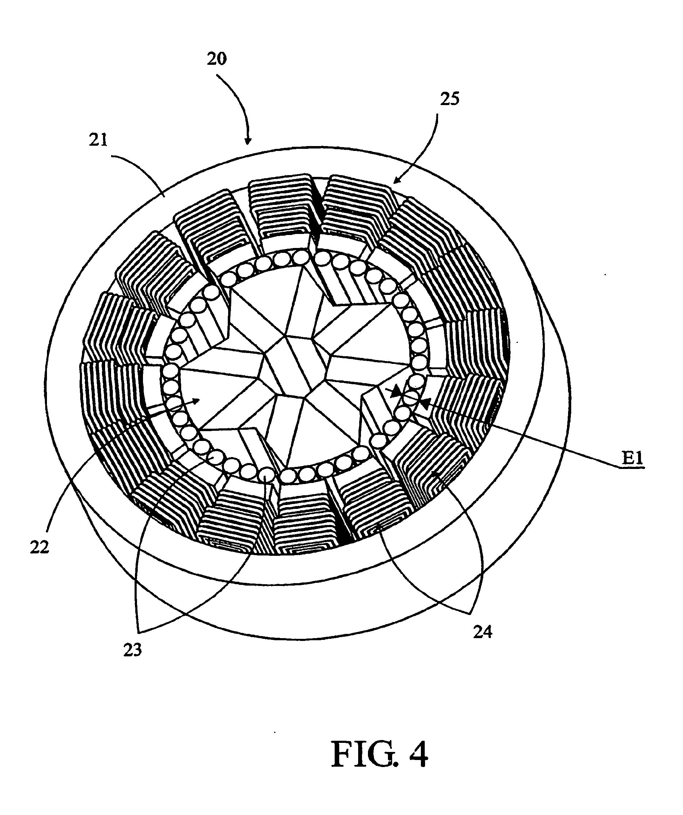

La figure 4 est une vue similaire à celle de la figure 1 représentant une construction dans laquelle le dispositif 20 est équipé de seize bobinages électriques 24 logés à l'intérieur d'une carcasse cylindrique 21 et qui constituent le stator 25. L'entraînement motorisé est similaire au précédent et le rotor 22 qui est constitué d'un arrangement magnétique rotatif est sensiblement identique au rotor 12. Il en est de même de la couronne d'éléments magnétocaloriques 23 qui est adjacente à l'arrangement magnétique et disposé dans l'entrefer qui sépare le rotor 22 du stator 25 correspondant au premier espace E1. Le fait d'augmenter le nombre de bobinages électriques permet de piloter de façon plus progressive le champ tournant et de mieux contrôler l'entraînement en rotation du rotor 22.

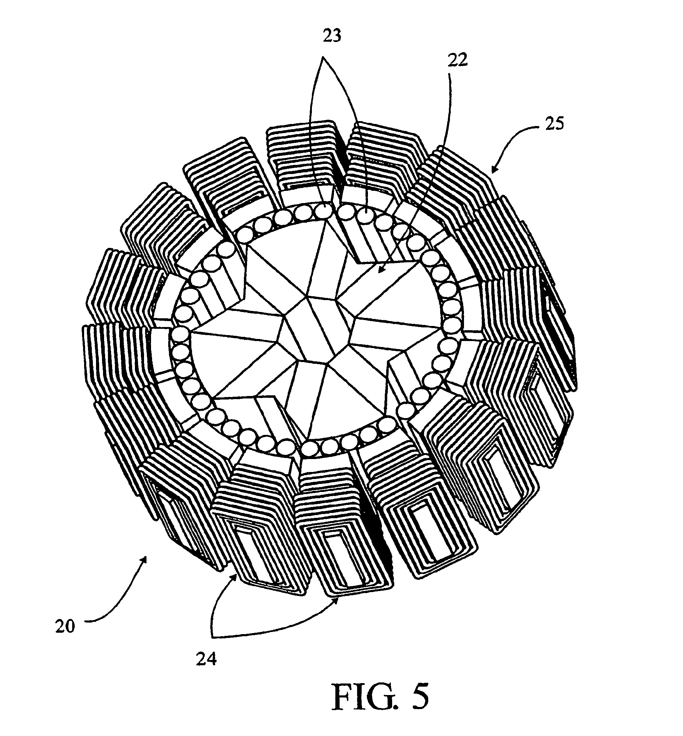

La figure 5 est une vue similaire à celle de la figure 4, mais où la carcasse cylindrique périphérique 21 a été retirée.

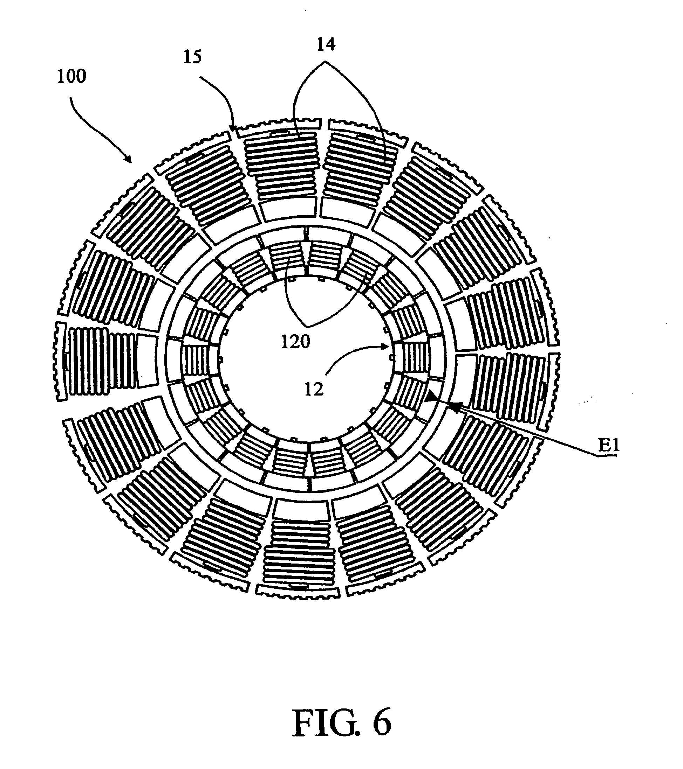

La figure 6 représente une autre forme de réalisation où la carcasse a été retirée, qui diffère de celle de la figure 2, principalement en ce que les aimants permanents 17 de l'arrangement magnétique sont remplacés par des électro-aimants 120 qui équipent le rotor 12. Le dispositif 100 comporte dans ce cas un ensemble de dix sept bobinages électriques 14, d'axes radiaux, régulièrement placés autour dudit rotor 12 et constituant un stator 15. Le nombre des électro-aimants 120 est dans ce cas de dix huit, de sorte que les bobinages électriques 14 présentent par rapport aux électro-aimants 120 une dissymétrie géométrique, en l'occurrence un décalage axial de quelques degrés par rapport aux bobinages électriques 14 correspondants pour imposer au rotor un sens de rotation privilégié. Dans cette variante, les éléments magnétocaloriques (non représentés) peuvent former une couronne adjacente à l'arrangement magnétique et disposé dans l'entrefer qui sépare le rotor 12 du stator 15 correspondant au premier espace E1.

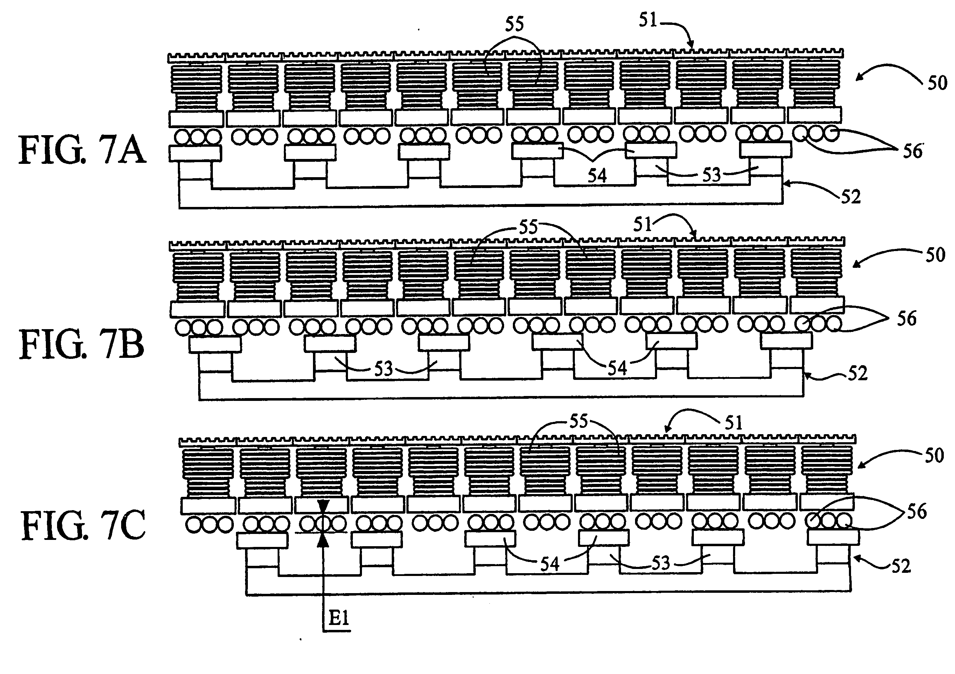

Les figures 7A, 7B et 7C correspondent à une première forme de réalisation du dispositif de l'invention dans lequel l'entraînement de l'arrangement magnétique s'effectue par déplacement linéaire. Le dispositif 50 comporte une carcasse allongée non représentée, un stator linéaire fixe 51 et un chariot 52 mobile alternativement par rapport audit stator linéaire fixe 51 et portant ledit arrangement magnétique, composé dans ce cas d'une série d'aimants permanents 53, associés chacun à un élément 54 magnétiquement perméable. Le stator linéaire fixe 51 est constitué d'un ensemble de bobinages électriques 55 d'axes parallèles et perpendiculaires à la direction de déplacement du chariot 52. Une série d'éléments magnétocaloriques 56 est alignée pour former une rangée adjacente à l'arrangement magnétique et disposée dans l'entrefer entre ledit stator linéaire fixe 51 et ledit arrangement magnétique porté par le chariot 52, ou plus exactement la ligne des éléments magnétiquement perméables 54, et correspondant au premier espace E1.

Les trois figures 7A, 7B et 7C correspondent à trois positions successives du chariot 52 mobile linéairement au cours de son déplacement. Les lignes de champ qui traversent les bobinages électriques 55 et les aimants permanents 53 en fonction de l'alimentation desdits bobinages provoquent le déplacement linéaire dudit chariot 52.

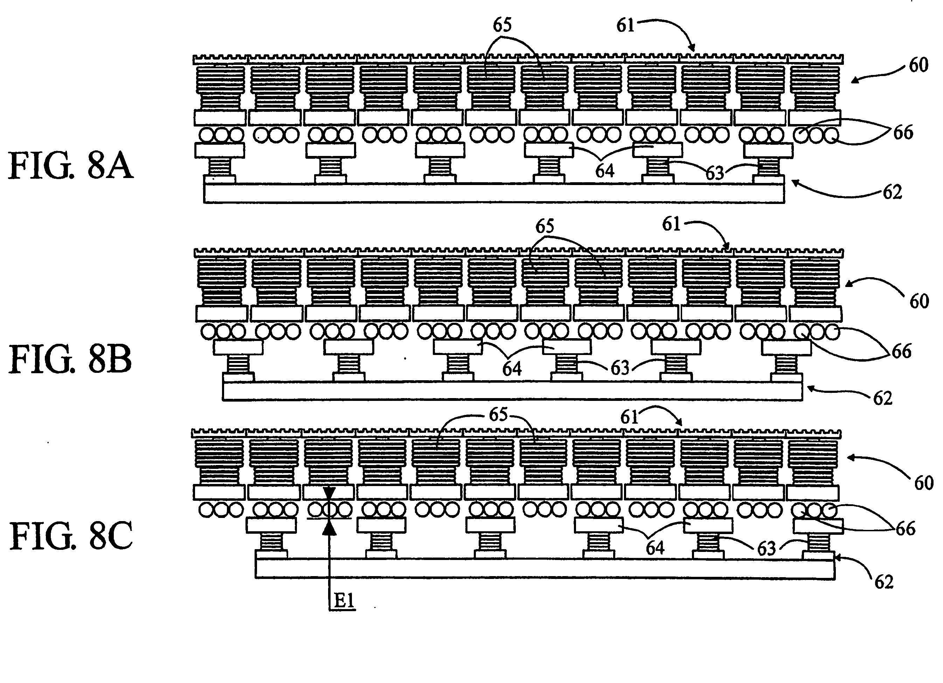

Les figures 8A, 8B et 8C représentent des vues similaires à celles de figures précédentes 7A, 7B et 7C. Le dispositif 60 comporte comme précédemment une carcasse allongée non représentée, un stator linéaire fixe 61 et un chariot 62 mobile alternativement par rapport audit stator linéaire fixe 61 et portant ledit arrangement magnétique, composé dans ce cas d'une série d'électroaimants 63, associés chacun à un élément 64 magnétiquement perméable. Le stator linéaire fixe 61 comporte un ensemble de bobinages électriques 65 d'axes parallèles et perpendiculaires à la direction de déplacement du chariot 62. Une série d'éléments magnétocaloriques 66 est alignée pour former une rangée adjacente à l'arrangement magnétique et disposée dans l'entrefer entre ledit stator linéaire fixe 61 et ledit arrangement magnétique porté par le chariot 62, correspondant au premier espace E1.

Les trois figures 8A, 8B et 8C correspondent à trois positions successives du chariot 62 mobile linéairement au cours de son déplacement. Le mode de fonctionnement du dispositif 60 est identique à celui du dispositif précédent 50 des figures 7A, 7B et 7C.

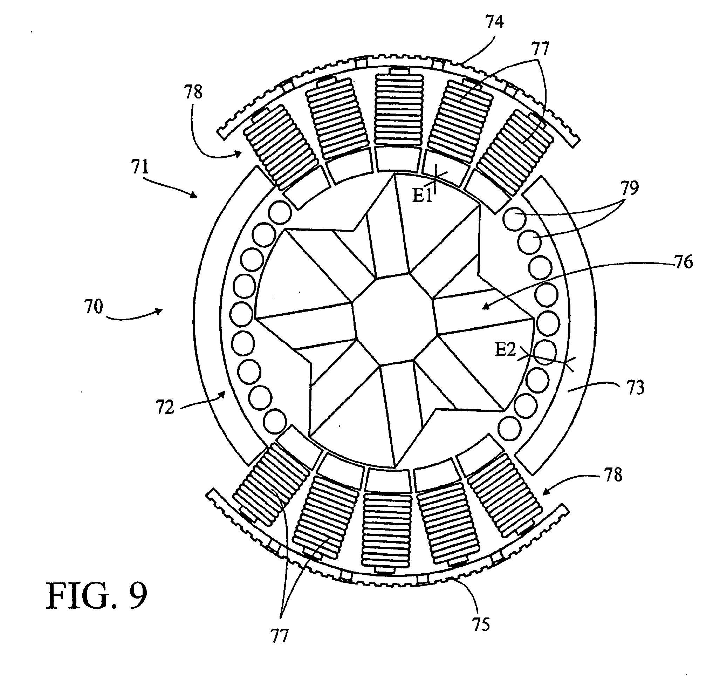

Le dispositif 70 de la figure 9 correspond à une variante de réalisation proche de celle des figures 1 à 5. Il comporte une carcasse extérieure 71, constituée de deux premiers segments cylindriques 72 et 73. Cette carcasse 71 est complétée par deux seconds segments cylindriques 74 et 75 qui ont un diamètre supérieur à celui des premiers segments 72 et 73. A l'intérieur de cette carcasse 71, et plus particulièrement à l'intérieur des deux premiers segments cylindriques 72 et 73, est monté un rotor 76 qui est constitué d'un arrangement magnétique rotatif similaire à celui des figures 1 à 5. On notera que dans l'exemple représenté, le secteur angulaire sur lequel s'étendent les deux premiers segments cylindriques 72 et 73 est d'environ 90 à 120°, ces valeurs n'étant pas limitatives et pouvant varier en fonction de la disposition des bobinages électriques 77 et des éléments magnétocaloriques 79. Les seconds segments cylindriques 74 et 75 servent de support à des bobinages électriques 77, qui sont au nombre de dix, répartis symétriquement par rapport à l'axe central du rotor 76 et constituant un stator 78. Le nombre de ces bobinages électriques 77 est variable, mais au minimum égal à deux. La rotation du rotor 76 est provoquée par une alimentation décalée des bobinages électriques 77 diamétralement opposés.

On constate que, dans cette réalisation, le premier espace E1 qui sépare le rotor 76 du stator 78 constitue un entrefer très étroit. En revanche, le second espace E2 qui sépare les premiers segments cylindriques 72 et 73 de la carcasse 71 du rotor 76 constitue un entrefer suffisamment grand pour loger l'organe thermique constitué dans ce cas de deux segments annulaires d'éléments magnétocaloriques 79. Ces éléments magnétocaloriques 79 sont, comme dans les exemples précédents, adjacents à l'arrangement magnétique pour bénéficier du flux magnétique maximal. Ces éléments magnétocaloriques 79 sont répartis en deux groupes, disposés symétriquement autour dudit rotor 76, par rapport à l'axe central de ce dernier. Cette forme de réalisation permet la rotation du rotor 76 avec un minimum d'énergie compte tenu du premier espace E1 de l'entrefer très faible avec le stator 78, sans toutefois pénaliser le rendement thermique du dispositif 70 qui est assuré par les éléments magnétocaloriques 79 en quantité suffisante.

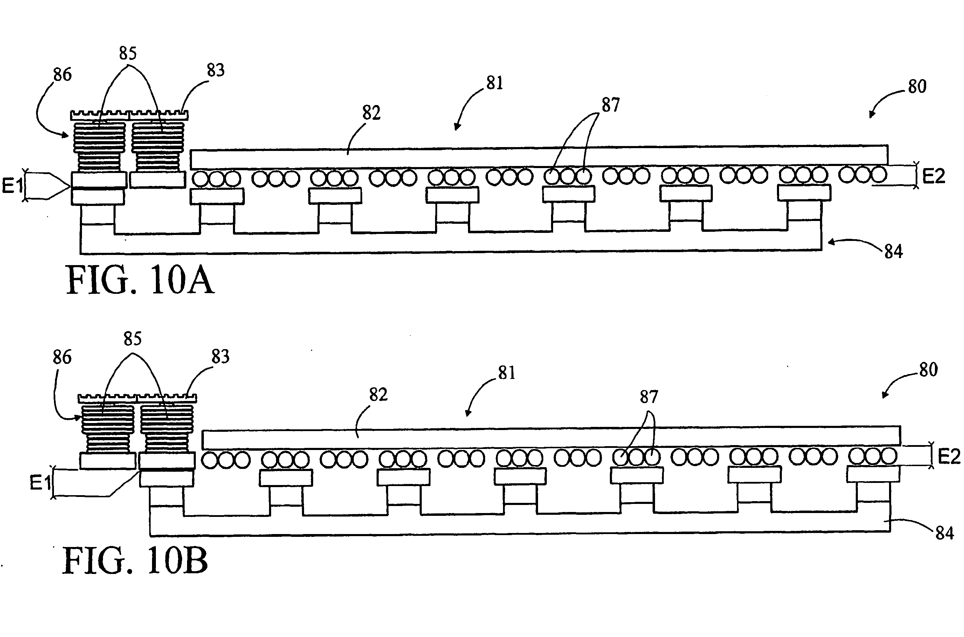

Le dispositif 80 des figures 10A et 10B est le pendant du dispositif 70 ci-dessus mais appliqué à un moteur linéaire, dont la réalisation est proche de celle des figures 7A-C. Il comporte une carcasse extérieure 81, constituée d'un premier segment linéaire 82, complété par un second segment linéaire 83 situé à un niveau différent du premier segment 82. En parallèle de cette carcasse 81, est monté un chariot 84 qui est constitué d'un arrangement magnétique linéaire similaire à celui des figures 7A-C. On notera que dans l'exemple représenté, le premier segment linéaire 82 s'étend sur environ 1/6^{e} de la longueur totale de la carcasse 81, cette valeur n'étant pas limitative et pouvant varier en fonction de la disposition des bobinages électriques 85 et des éléments magnétocaloriques 87. Il en est de même en ce qui concerne le nombre de bobinages électriques 85 qui peut également varier et être limité à un bobinage, par exemple. Dans ce dispositif 80, le second segment linéaire 83 sert de support à des bobinages électriques 85 qui sont au nombre de deux, disposés côte à côte et constituant un stator 86. Les figures 10A et 10B illustrent les deux positions extrêmes du chariot mobile 84 dont le déplacement linéaire est provoqué par une alimentation alternée des bobinages électriques 85.

On constate que, dans cette réalisation, le premier espace E1 qui sépare le chariot mobile 84 du stator 86 constitue un entrefer très étroit. En revanche, le second espace E2 qui sépare le premier segment linéaire 82 du chariot mobile 84 constitue un entrefer suffisamment grand pour loger l'organe thermique formé dans ce cas d'une rangée d'éléments magnétocaloriques 87. Ces éléments magnétocaloriques 87 sont, comme dans les exemples précédents, adjacents à l'arrangement magnétique pour bénéficier du flux magnétique maximal. Cette forme de réalisation permet le déplacement linéaire du chariot mobile 84 avec un minimum d'énergie compte tenu du premier espace E1 de l'entrefer très faible avec le stator 86, sans toutefois pénaliser le rendement thermique du dispositif 80 qui est assuré par les éléments magnétocaloriques 87 en quantité suffisante.

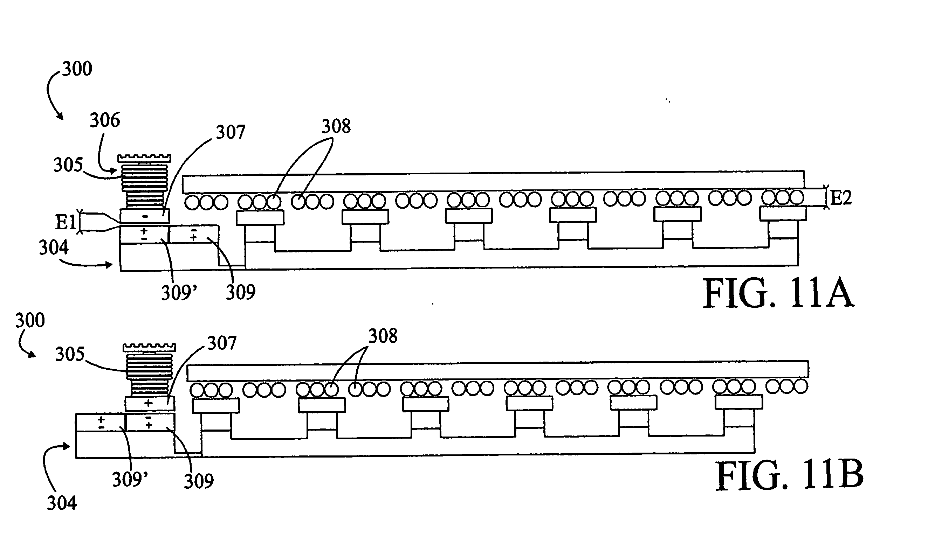

Le dispositif 300 des figures 11A et 11B représente une variante de réalisation du dispositif représenté aux figures 10A et 10B. Le dispositif 300 représenté comporte en effet un seul bobinage électrique 305 réalisant l'actionnement du chariot 304 en vue d'un déplacement linéaire de ce dernier. Le chariot porte l'arrangement magnétique composé d'aimants permanents. Deux aimants permanents 309' et 309 parmi l'ensemble des aimants permanents formant l'arrangement magnétique sont disposés côte-à-côte et sont destinés à coopérer avec un unique bobinage électrique 305 en vue du déplacement du chariot 304. Ils comportent chacun une aimantation opposée de sorte que selon l'alimentation du bobinage électrique 305 et le pôle magnétique crée au niveau de la pièce de base 307, chacun des deux aimants permanents 309', 309 est soit repoussé, soit attiré, créant ainsi le mouvement séquentiel du chariot 304. La figure 11A représente à cet effet une première position extrémale du chariot 304 dans laquelle la pièce de base 307 possède un pole magnétique négatif (-) et l'aimant permanent 309' situé à gauche sur la figure et possédant un pôle magnétique positif (+) est disposé au niveau de cette dernière et la figure 11 B représente la seconde position extrémale du chariot 304 dans laquelle la pièce de base 307 possède un pole magnétique positif (+) et l'aimant permanent 309 situé à droite sur la figure et possédant un pôle magnétique négatif (-) est au niveau de cette dernière. Dans cette variante de réalisation, on constate également un premier espace E1 de l'entrefer très étroit séparant le chariot mobile 304 du stator 306 et un second espace E2 de l'entrefer suffisamment grand pour loger l'organe thermique constitué, également dans cette variante, d'une rangée d'éléments magnétocaloriques 308 et l'on obtient les mêmes avantages que ceux indiqués pour le dispositif des figures 10A et 10B, puisque les éléments magnétocaloriques 308 sont, comme dans les exemples précédents, adjacents à l'arrangement magnétique pour bénéficier du flux magnétique maximal.

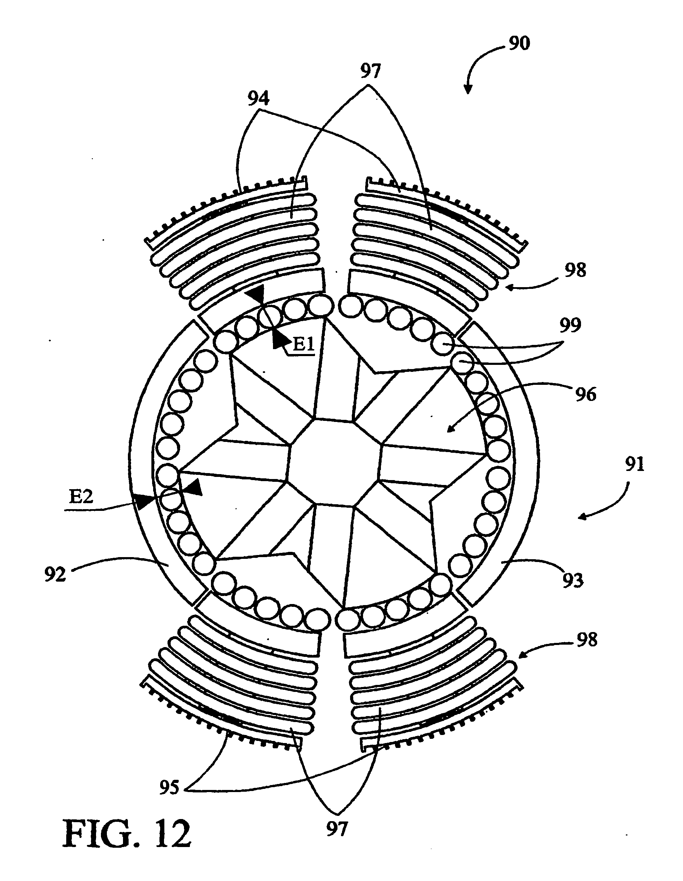

Le dispositif 90 de la figure 12 correspond à une variante de réalisation proche de celle de la figure 9 dans laquelle les éléments magnétocaloriques 99 sont toujours adjacents à l'arrangement magnétique, et disposés à la fois dans les zones libres de bobinage, correspondant au second espace E2 de l'entrefer, et dans le premier espace E1 de l'entrefer entre le rotor 96 et le stator 91. Ce dispositif comporte également une carcasse extérieure ou périphérique 91, constituée de deux premiers segments cylindriques 92 et 93. Cette carcasse 91 est complétée par deux seconds segments cylindriques 94 et 95 présentant un diamètre supérieur à celui des premiers segments 92 et 93. Le rotor 96 est monté à l'intérieur des deux premiers segments cylindriques 92 et 93, et est constitué d'un arrangement magnétique rotatif similaire à celui des figures 1 à 5. Ici également, le secteur angulaire sur lequel s'étendent les deux premiers segments cylindriques 92 et 93 peut varier en fonction de la disposition des bobinages électriques 97 et des éléments magnétocaloriques 99. Les seconds segments cylindriques 94 et 95 servent de support à des bobinages électriques 97, qui sont au nombre de quatre et qui constituent un stator 98. Le nombre de ces bobinages électriques 97 est variable, mais de préférence au minimum égal à deux. La rotation du rotor 96 est provoquée par une alimentation décalée des bobinages électriques 97 diamétralement opposés.

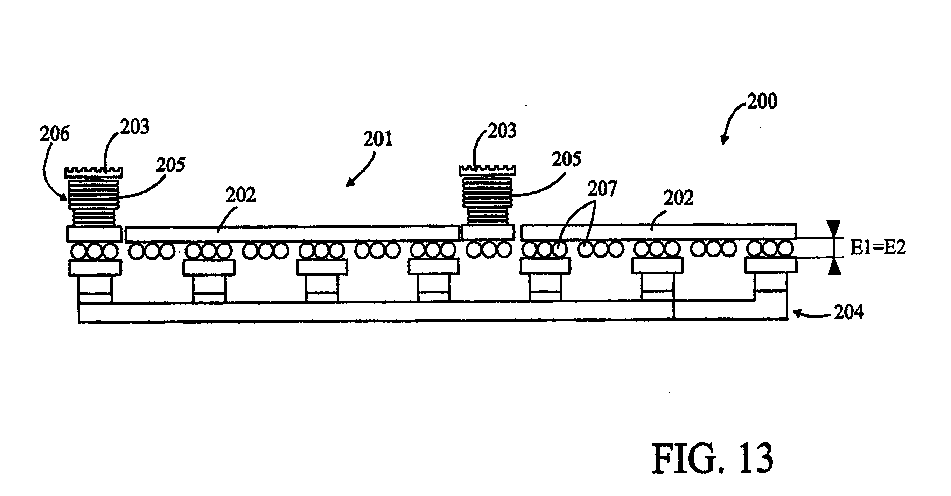

Le dispositif 200 de la figure 13 est le pendant du dispositif 90 ci-dessus mais appliqué à un moteur linéaire, dont la réalisation est proche de celle des figures 10A et 10B dans laquelle les éléments magnétocaloriques 207 sont toujours adjacents à l'arrangement magnétique et disposés à la fois dans les zones libres de bobinage, correspondant au second espace E2 de l'entrefer, et dans le premier espace E1 de l'entrefer entre le chariot 204 et le stator 206. Il comporte une carcasse extérieure 201, constituée d'un premier segment linéaire 202, complété par un second segment linéaire 203 situé à un niveau différent du premier segment 202. Un chariot 204 constitué d'un arrangement magnétique linéaire similaire à celui des figures 7A-C est monté qui en parallèle de cette carcasse 201. On notera que dans l'exemple représenté, le premier segment linéaire 202 s'étend sur deux zones de la longueur totale de la carcasse 201, cette configuration n'étant pas limitative et pouvant varier en fonction de la disposition des bobinages électriques 205. Il en est de même en ce qui concerne le nombre de bobinages électriques qui peut également varier et être limité à un bobinage, par exemple. Dans ce dispositif 200, le second segment linéaire 203 sert également de support à des bobinages électriques 205 qui sont au nombre de deux, disposés de manière espacée l'un de l'autre et constituant un stator 206.

### Possibilités d'application industrielle:

La présente invention n'est pas limitée aux exemples de réalisation décrits, mais s'étend à toute modification et variante évidentes pour un homme du métier tout en restant dans l'étendue de la protection définie dans les revendications annexées. Le nombre des aimants qui composent l'arrangement magnétique, leur forme et leur disposition peuvent être modifiés en fonction des objectifs recherchés en matière de rendement, d'encombrement, de vitesse de rotation du rotor, etc. Le nombre des bobinages électriques de même que leur disposition peuvent également varier selon les objectifs à atteindre. La nature des matériaux, notamment des matériaux magnétocaloriques, celle des éléments magnétiquement perméables et celle des autres composants tels que la carcasse du dispositif peuvent être modifiés selon les besoins.

## Revendications

1. Dispositif de génération de flux thermique à matériau magnétocalorique (10, 20, 100, 50, 60, 90, 200) comportant au moins une unité de génération de flux thermique logée dans une carcasse extérieure (11, 21, 91, 201) et pourvue d'au moins un organe thermique contenant au moins un élément magnétocalorique, d'au moins un arrangement magnétique agencé pour générer un champ magnétique, d'au moins un entraînement électrique agencé pour assurer le déplacement dudit arrangement magnétique par rapport à chaque élément magnétocalorique (13, 23, 56, 66, 99, 207) afin de le soumettre à une variation de champ magnétique et provoquer une variation de sa température, de moyens pour capter des calories et/ou frigories émises par chaque élément magnétocalorique en raison de ladite variation du champ magnétique, ledit entraînement électrique étant intégré au dispositif de génération de flux thermique à matériau magnétocalorique (10, 20, 100, 50, 60, 90, 200) et comportant au moins un bobinage électrique (14, 24, 55, 65, 97, 205) muni d'un enroulement porté par une armature (16) et alimenté en courant électrique de manière à générer une variation de champ magnétique qui engendre le déplacement d'un assemblage mobile (12, 22, 52, 62, 96, 204) portant ledit arrangement magnétique, dispositif **caractérisé en ce que** ledit élément magnétocalorique (13, 23, 56, 66, 99, 207) est adjacent audit arrangement magnétique et disposé dans l'entrefer constitué par au moins un premier espace (E1) délimité entre ledit arrangement magnétique et ladite armature (16) desdits bobinages électriques.

2. Dispositif selon la revendication 1, **caractérisé en ce qu'**il comporte au moins deux bobinages électriques (14, 24, 55, 65, 97, 205).

3. Dispositif, selon la revendication 1 ou 2, **caractérisé en ce que** ledit élément magnétocalorique est disposé, de manière continue, dans ledit premier espace (E1) et dans un second espace (E2) adjacent au premier, ce second espace (E2) étant délimité entre ledit arrangement magnétique et ladite carcasse extérieure (91, 201).

4. Dispositif selon la revendication 2, dans lequel ledit entraînement électrique est un moteur rotatif, **caractérisé en ce qu'**il comporte un stator fixe (15, 25) logé dans la carcasse périphérique (11, 21), et un rotor (12, 22) monté à l'intérieur de ladite carcasse coaxialement par rapport audit stator fixe, ledit rotor portant ledit arrangement magnétique et ledit stator fixe comportant lesdits bobinages électriques (14, 24), et **en ce que** les éléments magnétocaloriques (13, 23) forment une couronne continue entourant ledit rotor (12, 22) et occupant intégralement ledit premier espace (E1) de l'entrefer entre ledit stator fixe et ledit rotor.

5. Dispositif selon la revendication 3, dans lequel ledit entraînement électrique est un moteur rotatif, **caractérisé en ce qu'**il comporte un stator fixe (98) logé dans la carcasse périphérique (91) et un rotor (96) monté à l'intérieur de ladite carcasse coaxialement par rapport audit stator fixe, ledit rotor portant ledit arrangement magnétique et ledit stator fixe comportant au moins deux bobinages électriques (97) qui s'étendent angulairement sur une première partie de ladite carcasse en laissant une deuxième partie de ladite carcasse libre de bobinages électriques (97), et **en ce que** ledit élément magnétocalorique (99) est disposé à la fois dans le premier espace (E1) correspondant à la première partie de la carcasse et dans le second espace (E2) adjacent au premier espace et correspondant à la deuxième partie libre de bobinages électriques (97).

6. Dispositif selon la revendication 2, dans lequel ledit entraînement électrique est un moteur linéaire, **caractérisé en ce qu'**il comporte une carcasse allongée, un stator linéaire fixe (51, 61) logé dans ladite carcasse et un chariot, mobile (52, 62) linéairement, alternativement par rapport audit stator fixe, le chariot mobile portant ledit arrangement magnétique et ledit stator fixe comportant lesdits bobinages électriques (55, 65), et **en ce que** les éléments magnétocaloriques (56, 66) forment au moins une rangée continue alignée le long du stator linéaire fixe (51, 61), et occupant intégralement ledit premier espace (E1) de l'entrefer entre ledit stator linéaire et ledit chariot mobile.

7. Dispositif, selon la revendication 3, dans lequel ledit entraînement électrique est un moteur linéaire, **caractérisé en ce qu'**il comporte une carcasse allongée (201), un stator linéaire fixe (206) logé dans ladite carcasse, comportant au moins un bobinage électrique (205) et s'étendant sur une première partie de la longueur de cette carcasse en laissant libre de bobinages électriques une deuxième partie de ladite carcasse, un chariot (204), mobile linéairement, alternativement par rapport audit stator fixe et portant ledit arrangement magnétique, et **en ce que** ledit élément magnétocalorique est disposé à la fois dans le premier espace (E1) de l'entrefer correspondant à la première partie de la carcasse et dans le second espace (E2) adjacent au premier espace et correspondant à la deuxième partie de la carcasse libre de bobinages électriques.

8. Dispositif selon l'une quelconque des revendications précédentes, **caractérisé en ce que** ledit arrangement magnétique comporte un ensemble d'aimants permanents (17, 53).

9. Dispositif selon la revendication 8, **caractérisé en ce que** lesdits aimants permanents (17, 53) dudit arrangement magnétique dudit rotor comportent au moins un élément magnétiquement perméable (18, 54).

10. Dispositif selon l'une quelconque des revendications 4 et 5, **caractérisé en ce que** lesdits bobinages électriques (14, 24, 97) ont chacun un axe disposé selon une direction sensiblement radiale.

11. Dispositif selon l'une quelconque des revendications 6 et 7, **caractérisé en ce que** chaque bobinage électrique (55, 65, 205) a un axe parallèle et sensiblement perpendiculaire à la direction de déplacement dudit chariot mobile (52, 62, 204).

12. Dispositif selon la revendication 4 ou 6, **caractérisé en ce que** ledit ensemble de bobinages électriques (14, 24) présente une dissymétrie géométrique par rapport aux lignes de flux générées par ledit arrangement magnétique pour imposer un sens de rotation privilégié audit rotor (12, 22) ou un sens de déplacement linéaire privilégié audit chariot mobile (52, 62).

## Claims

1. Thermal flux generating device with magnetocaloric material (10, 20, 100, 50, 60, 90, 200) comprising at least one thermal flux generating unit housed in an external shell (11, 21, 91, 201) and equipped with at least one thermal element containing at least one magnetocaloric element, with at least one magnetic arrangement arranged so as to generate a magnetic field, with at least one electric drive arranged so as to ensure the movement of the said magnetic arrangement in relation to each magnetocaloric element (13, 23, 56, 66, 99, 207) in order to subject it to a variation in magnetic field and to cause its temperature to vary, means to collect the calories and/or frigories emitted by each magnetocaloric element due to the said variation in magnetic field, with the said electric drive being integrated into the thermal flux generating device with magnetocaloric material (10, 20, 100, 50, 60, 90, 200) and comprising at least one electric coil (14, 24, 55, 65, 97, 205) equipped with a winding supported by an armature (16) and supplied with electric current so as to generate a variation in magnetic field which causes the movement of a mobile assembly (12, 22, 52, 62, 96, 204) that supports the said magnetic arrangement, device **characterized in that** the said magnetocaloric element (13, 23, 56, 66, 99, 207) is adjacent to the said magnetic arrangement and positioned in the air gap formed by at least a first space (E1) delimited between the said magnetic arrangement and the said armature (16) of said electric coils.

2. Device according to claim 1, **characterized in that** it comprises at least two electric coils (14, 24, 55, 65, 97, 205).

3. Device according to claim 1 or 2, **characterized in that** the said magnetocaloric element is positioned, in a continuous manner, in the said first space (E1) and a second space (E2) adjacent to the first one, the said second space (E2) being delimited between the said magnetic arrangement and the said external shell (91, 201).

4. Device according to claim 2, in which the said electric drive is a rotary motor, **characterized in that** it comprises a fixed stator (15, 25) housed in the peripheral shell (11, 21) and a rotor (12, 22) mounted inside the said shell, coaxially in relation to the said fixed stator, with the said rotor supporting the said magnetic arrangement and the said fixed stator comprising the said electric coils (14, 24), and **in that** the magnetocaloric elements (13, 23) form a continuous crown that surrounds the said rotor (12, 22) and fully takes up the said first space (E1) of the air gap between the said fixed stator and the said rotor.

5. Device according to claim 3, in which the said electric drive is a rotary motor, **characterized in that** it comprises a fixed stator (98) housed in the peripheral shell (91) and a rotor (96) mounted inside the said shell, coaxially in relation to the said fixed stator, with the said rotor supporting the said magnetic arrangement and the said fixed stator comprising at least two electric coils (97) that extend angularly over a first portion of the said shell while leaving a second portion of the said shell free from electric coils (97), and **in that** the said magnetocaloric element (99) is positioned both in the first space (E1) that corresponds to the first portion of the shell and in the second space (E2) adjacent to the first space and which corresponds to the second portion free from electric coils (97).

6. Device according to claim 2, in which the said electric drive is a linear motor, **characterized in that** it comprises an elongated shell, a fixed linear stator (51, 61) housed in the said shell and a carriage (52, 62) that moves linearly, alternately in relation to the said fixed stator, with the mobile carriage supporting the said magnetic arrangement and the said fixed stator comprising the said electric coils (55, 65), and **in that** the magnetocaloric elements (56, 66) form at least one continuous row lined up along the fixed linear stator (51, 61) and fully taking up the said first space (E1) of the air gap between the said linear stator and the said mobile carriage.

7. Device according to claim 3, in which the said electric drive is a linear motor, **characterized in that** it comprises an elongated shell (201), a fixed linear stator (206) housed in the said shell, comprising at least one electric coil (205) and extending over a first portion of the length of this shell while leaving a second portion of the said shell free from electric coils, a carriage (204) that moves linearly, alternately in relation to the said fixed stator and supporting the said magnetic arrangement, and **in that** the said magnetocaloric element is positioned both in the first space (E1) of the air gap that corresponds to the first portion of the shell and in the second space (E2) adjacent to the first space and which corresponds to the second portion of the shell free from electric coils.

8. Device according to any of the previous claims, **characterized in that** the said magnetic arrangement comprises a set of permanent magnets (17, 53).

9. Device according to claim 8, **characterized in that** the said permanent magnets (17, 53) of the said magnetic arrangement of the said rotor comprise at least one magnetically permeable element (18, 54).

10. Device according to any of the claims 4 and 5, **characterized in that** the said electric coils (14, 24, 97) each have an axis positioned according to a roughly radial direction.

11. Device according to any of the claims 6 and 7, **characterized in that** each electric coil (55, 65, 205) has an axis that is parallel and roughly perpendicular to the moving direction of the said mobile carriage (52, 62, 204).

12. Device according to claim 4 or 6, **characterized in that** the said set of electric coils (14, 24) shows a geometrical dissymmetry in relation to the flux lines generated by the said magnetic arrangement to impose a preferred direction of rotation to the said rotor (12, 22) or a preferred direction of linear movement to the said mobile carriage (52, 62).

## Patentansprüche

1. Vorrichtung (10, 20, 100, 50, 60, 90, 200) mit magnetokalorischem Material zur Erzeugung eines Wärmeflusses bestehend aus zumindest einer in einem externen Gehäuse (11, 21, 91, 201) untergebrachten Einheit zur Erzeugung eines Wärmeflusses, welche mindestens mit einem mindestens ein magnetokalorisches Element enthaltendes Wärmeorgan ausgestattet ist, aus mindestens einer magnetische Anordnung, die ausgelegt ist, um ein Magnetfeld zu erzeugen, aus mindestens einem elektrischen Antrieb der ausgelegt ist, um die Bewegung der besagten magnetischen Anordnung in Bezug auf jedes magnetokalorische Element (13, 23, 56, 66, 99, 207) zu erzeugen, um es einer Magnetfeld-Variation auszusetzen und eine Änderung seiner Temperatur zu verursachen, aus Mitteln zum Auffangen der auf Grund der besagten Variation des Magnetfelds durch jedes magnetokalorische Element erzeugten Kalorien und/oder Frigorien, wobei der besagte elektrischen Antrieb in der Vorrichtung (10, 20, 100, 50, 60, 90, 200) mit magnetokalorischem Material zur Erzeugung eines Wärmeflusses integriert ist und mindestens eine elektrische Spule (14, 24, 55, 65, 97, 205) mit einer von einem Anker (16) getragenen Wicklung beträgt und mit elektrischem Strom gespeist wird, um eine Variation des Magnetfelds zu erzeugen, die die Bewegung einer das besagte magnetische Element tragenden mobilen Anordnung (12, 22, 52, 62, 96, 204) verursacht, **dadurch gekennzeichnete** Vorrichtung, dass das besagte magnetokalorische Element (13, 23, 56, 66, 99, 207) an der besagten magnetischen Anordnung anliegt und in dem Luftspalt angeordnet ist, der mindestens aus einem zwischen der besagten magnetischen Anordnung und dem besagten Anker (16) der besagten elektrischen Spulen befindlichen ersten Leerraum (E1) besteht.

2. Vorrichtung nach Anspruch 1, **dadurch gekennzeichnet, dass** sie mindestens zwei elektrische Spulen (14, 24, 55, 65, 97, 205) beträgt.

3. Vorrichtung nach Anspruch 1 oder 2, **dadurch gekennzeichnet, dass** das besagte magnetokalorische Element durchgehend in dem besagten ersten Freiraum (E1) und in einem zweiten Freiraum (E2), der an dem ersten anliegt, angeordnet ist, wobei dieser zweite Freiraum (E2) zwischen der besagten magnetischen Anordnung und dem besagten externen Gehäuse (91, 201) begrenzt ist.

4. Vorrichtung nach Anspruch 2, in welcher der besagte elektrische Antrieb aus einem Rotationsmotor besteht, **dadurch gekennzeichnet, dass** er einen in dem peripherischen Gehäuse (11, 21) untergebrachten feststehenden Stator (15, 25) beträgt, sowie einen in dem besagten Gehäuse, koaxial in Bezug auf den besagten feststehenden Stator montierten Rotor (12, 22), wobei der besagte Rotor die besagte magnetische Anordnung trägt und der besagte feststehende Stator die besagten elektrischen Spulen (14, 24) aufweist, und dadurch, dass die magnetokalorischen Elemente (13, 23) einen durchgehenden Kranz um den besagten Rotor (12, 22) bilden und den besagten ersten Freiraum (E1) des Luftspalts zwischen dem besagten feststehenden Stator und dem besagten Rotor vollständig einnehmen.

5. Vorrichtung nach Anspruch 3, in welcher der besagte elektrische Antrieb aus einem Rotationsmotor besteht, **dadurch gekennzeichnet, dass** er einen in dem peripherischen Gehäuse (91) untergebrachten feststehenden Stator (98) beträgt, sowie einen in dem besagten Gehäuse, koaxial in Bezug auf den besagten feststehenden Stator montierten Rotor (96), wobei der besagte Rotor die besagte magnetische Anordnung trägt und der besagte feststehende Stator mindestens zwei elektrische Spulen (97) beträgt, die sich auf einem Winkel über einen ersten Teil des besagten Gehäuses erstrecken und einen zweiten Teil des besagten Gehäuses frei von elektrischen Spulen (97) lassen, und dadurch, dass das besagte magnetokalorische Element (99) gleichzeitig in dem, dem ersten Teil des Gehäuses entsprechenden ersten Freiraum (E1) und in dem an dem ersten Freiraum (E1) anliegenden, dem zweiten Teil, der keine elektrischen Spulen (97) aufweist, entsprechenden Freiraum (E2) angeordnet ist.

6. Vorrichtung nach Anspruch 2, in welcher der besagte elektrische Antrieb aus einem Linearmotor besteht, **dadurch gekennzeichnet, dass** er ein längliches Gehäuse beträgt, sowie einen in dem besagten Gehäuse untergebrachten feststehenden Linear-Stator (51, 61) und einen Schlitten (52, 62), der in Bezug auf den besagten feststehenden Stator linear hin-und-her beweglich ist, wobei der besagte bewegliche Schlitten die besagte magnetische Anordnung trägt und der besagte feststehende Stator die besagten elektrischen Spulen (55, 65) aufweist, und dadurch, dass die magnetokalorischen Elemente (56, 66) mindestens eine entlang des feststehenden Stators (51, 61) ausgerichtete durchgehende Reihe bilden, und den besagten ersten Leerraum (E1) des Luftspalts zwischen dem besagten Linear-Stator und dem besagten beweglichen Schlitten vollständig einnehmen.

7. Vorrichtung nach Anspruch 3, in welcher der besagte elektrische Antrieb aus einem Linearmotor besteht, **dadurch gekennzeichnet, dass** er ein längliches Gehäuse (201), beträgt, sowie einen in dem besagten Gehäuse untergebrachten feststehenden Linear-Stator (206), der mindestens eine elektrische Spule (205) beträgt und sich auf einen ersten Teil der Länge dieses Gehäuses erstreckt, wobei ein zweiter Teil des besagten Gehäuses frei von elektrischen Spulen bleibt, und einen Schlitten (204), der in Bezug auf den besagten feststehenden Stator linear hin-und-her beweglich ist und die besagte magnetische Anordnung trägt, und dadurch, dass das besagte magnetokalorische Element gleichzeitig in dem, dem ersten Teil des Gehäuses entsprechenden ersten Freiraum (E1) und in dem an dem ersten Freiraum anliegenden, dem zweiten Teil, der keine elektrischen Spulen aufweist, entsprechenden Freiraum (E2) angeordnet ist.

8. Vorrichtung nach irgendeinem der vorherigen Ansprüche, **dadurch gekennzeichnet, dass** die besagte magnetische Anordnung einen Satz Permanentmagnete (17, 53) beträgt.

9. Vorrichtung nach Anspruch 8, **dadurch gekennzeichnet, dass** die besagten Permanentmagnete (17, 53) der besagten magnetischen Anordnung des besagten Rotors mindestens ein magnetisch permeables Element (18, 54) betragen.

10. Vorrichtung nach irgendeinem der Ansprüche 4 und 5, **dadurch gekennzeichnet, dass** die besagten elektrischen Spulen (14, 24, 97) jeweils eine entlang einer merklich radialen Richtung angeordnete Achse aufweisen.

11. Vorrichtung nach irgendeinem der Ansprüche 6 und 7, **dadurch gekennzeichnet, dass** jede elektrische Spule (55, 65, 205) eine parallele Achse aufweist, die merklich rechtwinklig zur Bewegungsrichtung des besagten beweglichen Schlittens (52, 62, 204) angeordnet ist.

12. Vorrichtung nach Anspruch 4 oder 6, **dadurch gekennzeichnet, dass** der besagte Satz elektrischer Spulen (14, 24) eine geometrische Unsymmetrie in Bezug auf die von der besagten magnetischen Anordnung erzeugten Feldlinien aufweist, um dem besagten Rotor (12, 22) eine bevorzugte Drehrichtung oder dem besagten beweglichen Schlitten (52, 62) eine bevorzugte lineare Bewegungsrichtung zuzuweisen.
